# EUROPEAN PATENT APPLICATION

(11) **EP 2 685 132 A1**
(43) Date of publication of application: **15.01.2014**
(21) Application number: 11860375.2
(22) Date of filing: 09.03.2011
(51) Int. Cl.: F16H 25/24, F16H 25/22

(54) **LINEAR ACTUATOR**

(71) Applicant: Hitachi, Ltd., Tokyo 100-8280 (JP)
(72) Inventor: YAMADA Hiroyuki, Tokyo 100-8280 (JP); HAYASE, Isao, Tokyo 100-8280 (JP)
(74) Representative: Beetz & Partner
(86) International application number: PCT/JP2011/055549
(87) International publication number: WO 2012/120670

(57) **Abstract**

A linear actuator (1) including a threaded shaft (51) and plural nuts (52) threaded onto the threaded shaft (51) to drive a drive target (55) with axial displacement of the threaded shaft caused by relatively rotating the threaded shaft (51) and the plural nuts (52) about an axis, includes: a link member (62) to connect two nuts of the plural nuts (52) and support the two nuts rotatably circumferentially of the threaded shaft (51) ; and a load transfer member (63) connected to the drive target to swingably support the link member (62). Thus, it is possible to easily reduce the difference between the loads applied to the nuts while reducing stiffness reduction of the load equalizing mechanism.

## Description

### Technical Field

The present invention relates to a linear actuator with a screw mechanism.

### Background Art

Linear actuators (such as ball screw feed devices) with a screw mechanism that is composed of a threaded shaft and nuts threaded onto the threaded shaft have been commonly used in the fields requiring high-speed and high-precision, while in the fields requiring large thrust, hydraulic linear actuators (such as hydraulic cylinders) have been commonly used. This is because it was difficult to realize an increase in thrust with the screw mechanism. With recent improvements in technology, however, screw mechanisms for producing large thrust are being developed, and electric linear actuators are being used in the fields where the hydraulic linear actuators have been previously commonly used. The electric linear actuators offer the advantages over the hydraulic linear actuators of being more efficient, allowing easier use of regenerative energy, having better control performance and the like, and are progressively replacing the hydraulic linear actuators.

However, when an electric linear actuator and a hydraulic cylinder producing the same thrust are compared, the diameter of the electric linear actuator is often larger than that of the hydraulic cylinder, and therefore, due to limitations of mounting space, the electric linear actuator can be difficult to use. In view of this, as a way of increasing thrust without increasing the radial size of the electric linear actuator, there are technologies that achieve an increase in thrust by threading plural nuts connected to a drive target (object to be driven) onto a single threaded shaft to reduce the load applied to each of the nuts (see Japanese Unexamined Patent Application Publication Nos. 2003-227557, 2002-137268, 2002-364724, Sho 60-256667, and Hei 4-8951). These documents each disclose a linear actuator in which two or more nuts connected to a drive target are threaded onto a single threaded shaft. For example, when two nuts are threaded onto a single threaded shaft so that the load is distributed evenly between the nuts, the load applied to each of the nuts can be reduced by half as compared with the case where only a single nut is used, so that the linear actuator can support twice the load.

### Citation List

### Patent Literature

Patent Literature 1: Japanese Unexamined Patent Application Publication No. 2003-227557
Patent Literature 2: Japanese Unexamined Patent Application Publication No. 2002-137268
Patent Literature 3: Japanese Unexamined Patent Application Publication No. 2002-364724
Patent Literature 4: Japanese Unexamined Patent Application Publication No. S60-256667
Patent Literature 5: Japanese Unexamined Patent Application Publication No. H4-8951

### Summary of Invention

### Technical Problem

Meanwhile, if connecting portions between the nuts and the drive target are rigid bodies, under the influence of the machining and assembly accuracy of the connecting portions, it is not necessarily the case that the load is distributed evenly between the nuts. Furthermore, the whole load might be applied to only one nut rather than being applied evenly to the nuts.

In order to address the above-mentioned problem, in some of the above five literature (Japanese Unexamined Patent Application Publication Nos. 2003-227557, 2002-137268, 2002-364724, and Sho 60-256667), an elastic body is used for each of the connecting portions so that the load is distributed evenly between the nuts, which causes a new problem of reductions in stiffness of the connecting portions. Furthermore, in the remaining literature (Japanese Unexamined Patent Application Publication No. Hei 4-8951), there is disclosed a construction in which the distance between two nuts is adjustable; however, there is still a problem in that it takes a lot of effort to adjust the distance. Also, although in this literature, there is disclosed a construction in which the distance between the two nuts is adjusted by a piezoelectric actuator or the like, such construction does not seem realistic because it makes a control system complicated and causes an increase in cost. As described above, the related art has a problem in equalizing the loads applied to the plural nuts, such as a reduction in stiffness or increased effort necessary for adjustment of assembly.

Accordingly, an object of the present invention is to provide a linear actuator capable of easily reducing the difference between the loads applied to nuts while reducing stiffness reduction.

### Solution to Problem

In order to achieve the above-described object, the present invention provides a linear actuator including a threaded shaft and plural nuts threaded onto the threaded shaft to drive a drive target with axial displacement of the threaded shaft caused by relatively rotating the threaded shaft and the plural nuts about an axis of the threaded shaft. The linear actuator includes: a link member to connect two nuts of the plural nuts and support the two nuts rotatably circumferentially of the threaded shaft; and a load transfer member connected to the drive target to swingably support the link member.

### Advantageous Effects of Invention

According to the present invention, it is possible to easily reduce the difference between the loads applied to nuts while reducing stiffness reduction.

### Brief Description of Drawings

Fig. 1 is a perspective view showing a general configuration of a linear actuator according to a first embodiment of the present invention.
Fig. 2 is a front view of the linear actuator shown in Fig. 1.
Fig. 3 is an enlarged view of the vicinity of a load equalizing mechanism 2 in the linear actuator shown in Fig. 2.
Fig. 4 is an exploded view of the load equalizing mechanism 2 in the linear actuator 1 according to the first embodiment of the present invention.
Fig. 5 is a view illustrating the principle of the load equalizing mechanism according to the present invention.
Fig. 6 is a view illustrating the principle of the load equalizing mechanism according to the present invention.
Fig. 7 is a view illustrating the principle of the load equalizing mechanism according to the present invention.
Fig. 8 is an exploded view of a load equalizing mechanism 3 in a linear actuator according to a second embodiment of the present invention.
Fig. 9 is a perspective view of a load equalizing mechanism in a linear actuator according to a third embodiment of the present invention.
Fig. 10 is an exploded view of the load equalizing mechanism shown in Fig. 9.
Fig. 11 is a perspective view of a load equalizing mechanism in a linear actuator according to a fourth embodiment of the present invention.
Fig. 12 is an exploded view of the load equalizing mechanism shown in Fig. 11.

### Description of Embodiments

Hereinafter, embodiments of the present invention will be described with reference to the accompanying drawings.

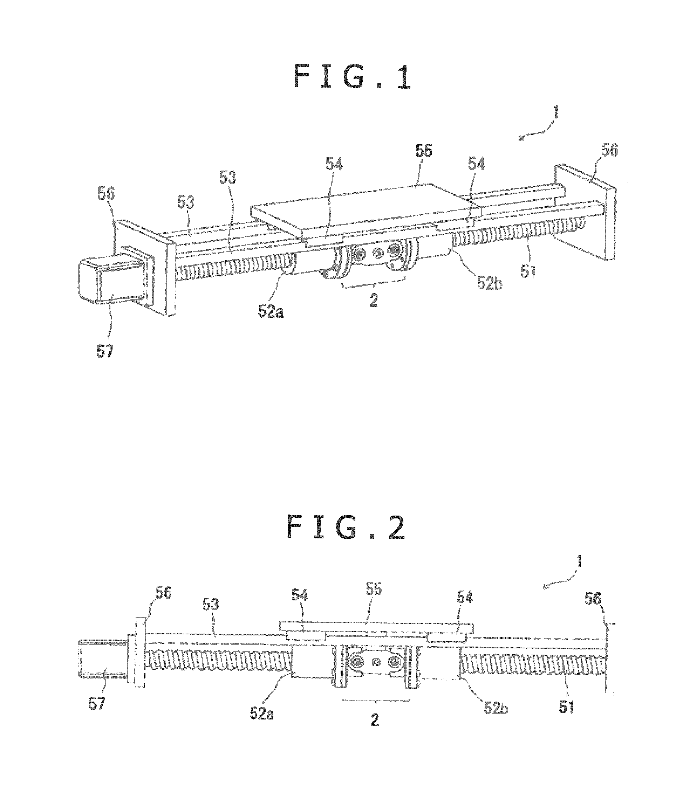

Fig. 1 is a perspective view showing a general configuration of a linear actuator according to a first embodiment of the present invention, and Fig. 2 is a front view of the linear actuator shown in Fig. 1. It should be noted that, in these drawings, the same portions are denoted by the same reference signs, and the description thereof will be skipped where appropriate (ditto for subsequent drawings). It should be also noted that, in the following description, since there are several similar elements, those similar elements will be identified with a common reference number, but distinguished using a different lowercase alphabetic letter suffix if necessary. If it is unnecessary to distinguish, such small alphabetic letter suffix will be omitted where appropriate.

The linear actuator 1 shown in these drawings includes: a threaded shaft 51 that is rotatably supported by a bearing (not shown) ; two nuts 52a and 52b that are threaded onto the threaded shaft 51; a motor (drive unit) 57 that serves as a drive source for rotatably driving the threaded shaft 51; a load equalizing mechanism 2 that connects the two nuts 52a and 52b; a drive target (object to be driven) 55 that is connected to the load equalizing mechanism 2; a linear guide (a rail 53 and a movable portion 54) for guiding the linear motion of the drive target 55; and side plates 56 for rotatably supporting the threaded shaft 51.

The two nuts 52a and 52b are connected to the drive target 55 through the load equalizing mechanism 2 and restrained from rotating about the axis of rotation of the threaded shaft 51 even if the threaded shaft 51 rotates. Therefore, by causing the motor 7 to rotatably drive the threaded shaft 51 and thereby relatively rotate the threaded shaft 51 and the nuts 52 about the axis, the nuts 52 are displaced axially of the threaded shaft 51, thereby driving the drive target 55. The linear guide includes: the rail 53 that extends between the two side plates 56 spaced apart in the axial direction of the threaded shaft 1; and the movable portion 54 that is mounted to the drive target 55 for allowing movement of the drive target 55 on the rail 53.

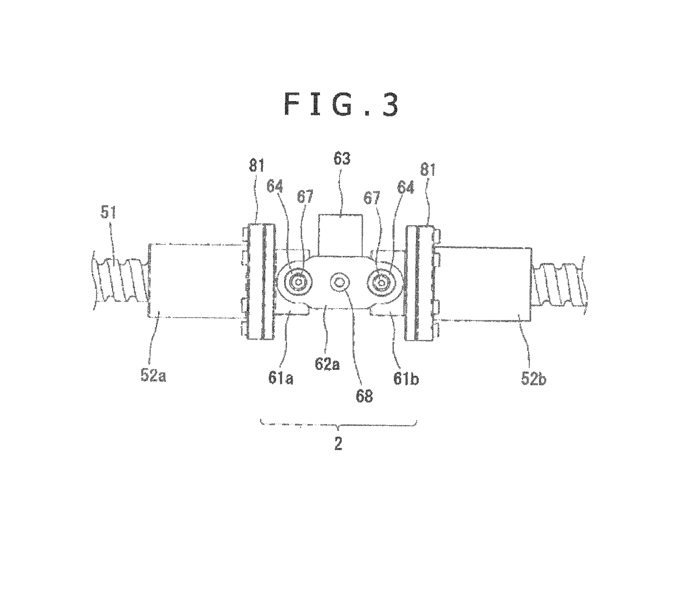

Fig. 3 is an enlarged view of the vicinity of the load equalizing mechanism 2 in the linear actuator shown in Fig. 2. In this drawing, the load equalizing mechanism 2 extends between the two nuts 52a and 52b and includes two mounting portions 61a and 61b, a pair of link members 62a and 62b, and a load transfer member 63.

The mounting portions 61a and 61b are connected to the nuts 52a and 52b, respectively, by bolts or the like through flanges 81 provided on outer peripheries of the nuts 52a and 52b. The mounting portions 61a and 61b reciprocate on the threaded shaft 51 along with the nuts 52a and 52b.

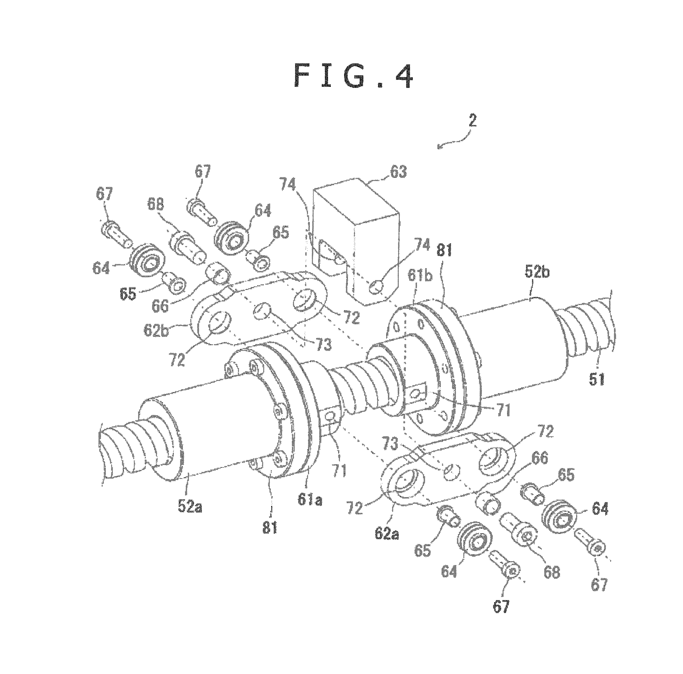

The pair of link members 62a and 62b are designed to connect the two nuts 52a and 52b by holding the two nuts 52a and 52b therebetween from the radial direction of the threaded shaft 51. In the example shown in this drawing, each of the link members 62a and 62b extends between the two mounting members 61a and 62b, thereby connecting the nuts 52a and 52b. Furthermore, the pair of link members 62a and 62b support one mounting member 61a of the mounting members through one shaft that is formed by two collinear bolts 67. Similarly, the pair of link members 62a and 62b support the other mounting member 62b of the mounting members through the other shaft that is formed by two collinear bolts 67. Each of the bolts 67 is disposed inside a spherical bearing 64 and a spacer 65 (see Fig. 4).

The load transfer member 63 swingably supports the pair of link members 62a and 62b through a shaft that is formed by two collinear bolts 68. Each of the bolts 68 is disposed inside a spacer 66 (see Fig. 4).

It should be noted that, here, the description is in terms of the case where the bolts 67 and 68 are used, however, other fastening means may be used.

Fig. 4 is an exploded view of the load equalizing mechanism 2 in the linear actuator 1 according to the first embodiment of the present invention.

In each of the mounting members 61a and 61b, there are provided two holes 71 that are each formed with an internally threaded portion for fastening the bolt 67. The hole 71 shown in this drawing is provided with its axis substantially perpendicular to the rotational axis of the threaded shaft 51. The two holes 71 corresponding to each of the mounting members 61a and 61b are arranged symmetrical about the rotational axis of the threaded shaft 51. Thus, the shaft formed by the two bolts 67 threaded into the two holes 71 is substantially perpendicular to the rotational axis of the threaded shaft 51.

In each of the link members 62a and 62b, a hole 72 for receiving the bolt 67 and the spherical bearing 64 is provided at both ends in the longitudinal direction thereof. Also, a hole 73 for inserting the bolt 68 is provided in between the two holes 72. In the example shown in this drawing, the three holes 72 and 73 provided in each of the link members are arranged with their centers lying on the same straight line, the hole 73 being located midway between the two holes 72. That is, the distances from the center of the hole 73 (axis of the bolt 68) to the centers of the two holes 72 (axes of the bolts 67) are equal, the axes of the bolts 67 and 68 being substantially perpendicular to the rotational axis of the threaded shaft 51.

The spherical bearing 64 is designed to apply a radial load and a thrust load in both directions and stored in the hole 72, with the spacer 65 disposed inside. The bolt 67 is threaded into the hole 71 through the spacer 65. The mounting member 61 and the link member 62 are connected through the spherical bearings 64, thereby allowing the link member 62 to rotate about the axes of the bolts 67 with respect to the mounting member 61 and be inclined with respect to the mounting member 61. Furthermore, the bolt 67 and the spherical bearing 64 are mounted in such a manner as to be relatively displaceable in the axial direction of the bolt 67.

The load transfer member 63 is provided with holes 74 that are each formed with an internally threaded portion for fastening the bolt 68. The spacer 66 is disposed inside the hole 73 of each of the link members 62, and the bolt 68 is threaded into the internally threaded portion of the corresponding hole 74 through the spacer 66. Thus, the load transfer member 63 supports the link members 61 so that the link members 61 are swingable about the axes of the bolts 68.

The above-described construction allows the link members 62 to swing about the axes of the bolts 68 with respect to the load transfer member 63. Also, this swinging of the link members 62 permits the two mounting portions 61a and 61b to rotate relatively within a predetermined minute range about the rotational axis of the threaded shaft 51. That is, the two nuts 52a and 52b connected to the two mounting portions 61a and 61b can be relatively rotated within a predetermined minute range about the rotational axis of the threaded shaft 51.

Next, referring to the drawings, the principle that the difference between the loads applied to the nuts 52 is reduced by the load equalizing mechanism 2 will be described. Here, it will be assumed, for purposes of description, that each of the nuts 52 is a ball nut with plural balls as rolling elements.

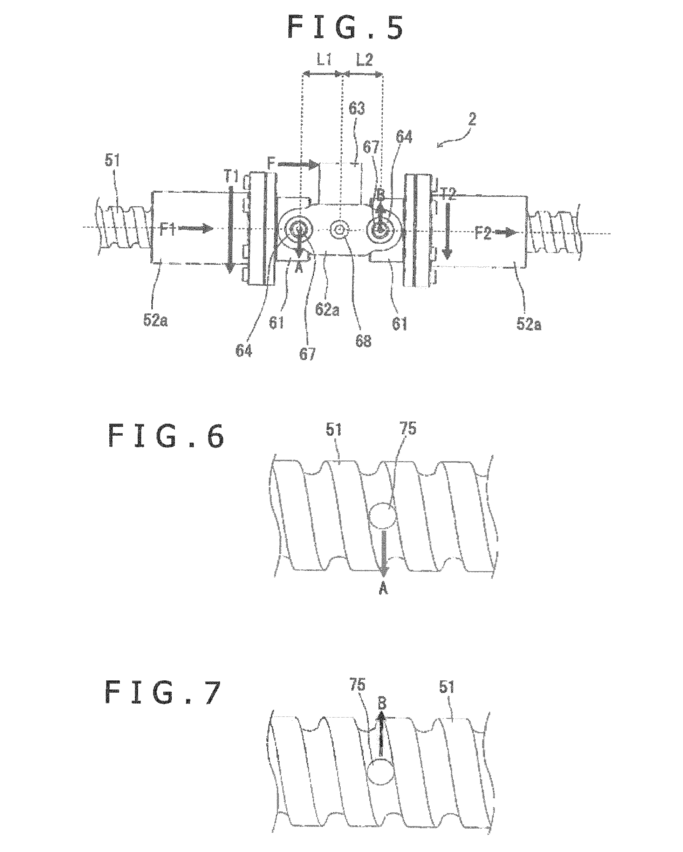

Figs. 5, 6, and 7 are views illustrating the principle of the load equalizing mechanism according to the present invention. Fig. 5 is a view with the arrows indicating a load or torque applied to each portion of the load equalizing mechanism 2. Fig. 6 is a view illustrating the relationship between a ball 75 of the nut 52a on the left side in Fig. 5 and the threaded shaft 51, and Fig. 7 is a view illustrating the relationship between a ball 75 of the nut 52b on the right side in Fig. 5 and the threaded shaft 51.

Here, it will be assumed that the load transferred from the drive target 55 to the load transfer member 63 is F. Further, it will be assumed that the load F is distributed to the two nuts 52a and 52b, and a load F1 is applied to the nut 52a on the left side of the drawing and a load F2 is applied to the nut 52b on the right side of the drawing. At this time, if there are no frictional losses or the like in each portion, F = F1 + F2. Furthermore, the loads F1 and F2 are applied to the nuts 52a and 52b, and thus torques T1 and T2 on the threaded shaft 51 are applied to the nuts 52a and 52b. Without consideration of frictional losses, the torques T1 and T2 can be expressed as: T1 = F1×L/2π; and T2 = F2×L/2π (where L represents the lead of the threaded shaft 51).

Here, it will be assumed that the loads F1 and F2 applied to the nuts 52a and 52b are unequal, namely, F1 > F2. If the loads F1 and F2 are unequal in this manner, the torques T1 and T2 also become unequal, that is, T1 > T2, resulting in differences in torque between the nuts 52a and 52b. As described above, since the load equalizing mechanism 2 allows the nuts 52a and 52b to rotate circumferentially of the threaded shaft 52 within a predetermined range, the nuts 52a and 52b tend to rotate on the basis of a torque difference therebetween. Here, since T1 > T2, the nut 52a subjected to the torque T1 tends to rotate in the direction of T1, and the nut 52b subjected to the torque T2 tends to rotate in the opposite direction of the direction of T2. Therefore, the two nuts 52a and 52b tend to rotate in opposite directions. At this time, if the rotational angle is minimal, the left side in the drawing of the link member 62a moves slightly in a lower direction (direction A) of the drawing, while the right side in the drawing of the link member 62a moves slightly in an upper direction (direction B) of the drawing, so that the link member 62a of Fig. 5 swings slightly counterclockwise in the drawing, with the bolt 68 as a pivot shaft. It should be noted that, at this time, the link member 62b swings slightly clockwise in the drawing, with the bolt 68 as a pivot shaft.

Next, a load change occurring in the nuts 52 when the link member 62a swings slightly in this manner will be described with reference to Figs. 6 and 7. Firstly, as described above, assuming that each of the nuts 52 is a ball nut, when the load F is applied from the left side to the right side of the drawing as shown in Fig. 5, the ball 75 and the threaded shaft 51 are in a position such that the right side in the drawing of the ball 75 has contact with the left side in the drawing of a spiral groove 76 of the threaded shaft 51 (see Figs. 6 and 7).

In this position, the following load change occurs in the nut 52a on the left side of the drawing. That is, when the unequal loads F1 and F2 cause the left side in the drawing of the link member 62a to move slightly in the direction of A, in response to this, the nut 52a also rotates slightly in the direction of the torque T1, so that the ball 75 in the nut 52a is slightly moved in the direction of A (see Fig. 6). In this manner, when the ball 75 moves in the direction of A, the ball 75 tends to move away from the spiral groove 76 of the threaded shaft 51, leading to a reduction in the contact load between the ball 75 and the threaded shaft 51. That is, the load F1 applied to the nut 52a is reduced.

Next, the following load change occurs in the nut 52b on the right side of the drawing. That is, when the unequal loads F1 and F2 cause the right side in the drawing of the link member 62a to move slightly in the direction of B, in response to this, the nut 52b rotates slightly in the opposite direction of the torque T2, so that the ball 75 in the nut 52b is slightly moved in the direction of B. When the ball 75 moves in the direction of B, the ball 75 tends to move toward the spiral groove 76 of the threaded shaft 51, leading to an increase in the contact load between the ball 75 and the threaded shaft 51. That is, the load F2 applied to the nut 52b is increased.

As described above, the loads F1 and F2 applied to the nuts 52a and 52b are in unequal conditions, such as F1 > F2, the nuts 52a and 52b rotates slightly about the rotational axis of the threaded shaft 52 so that F1 is reduced and F2 is increased. When F1 = F2 is established, the balance is achieved and the nuts 52a and 52b come to rest. By this operation, the load equalizing mechanism 2 can easily reduce the difference between the loads applied to the nuts 52a and 52b.

That is, in the linear actuator constructed in the above-described manner, if the loads applied to the two nuts 52a and 52b are unequal, the torques about the rotational axis of the threaded shaft 51 which correspond to the loads are applied to the nuts 52a and 52b, so that these torques also become unequal. Since the two nuts 52a and 52b are connected through the link members 62 as described above, if torques are unequal between the nuts 52a and 52b, the nuts 52a and 52b tend to rotate relatively to each other about the rotational axis of the threaded shaft 51 on the basis of the differences in torque. At this time, the nut 52 subjected to a larger torque tends to rotate in a direction to move a contact portion thereof away from the threaded shaft 51, while the nut 52 subjected to a smaller torque tends to rotate in a direction to move a contact portion thereof toward the threaded shaft 51. Thus, the load on the nut 52 subjected to a larger torque is reduced, while the load on the nut 52 subjected to a smaller torque is increased. As a result, the balance is achieved when the loads (torques) become equal, and the difference between the loads applied to the two nuts 52a and 52b is automatically reduced (preferably, the loads applied to the two nuts 52a and 52b become equal). According to this embodiment, therefore, it is possible to easily reduce the difference between the loads applied to the nuts 52a and 52b while reducing stiffness reduction.

Meanwhile, when this embodiment is viewed from another standpoint, because the nuts 52a and 52b tend to rotate (twist) relatively to each other when the torques T1 and T2 applied to the two nuts 52a and 52b are unequal, it can be said that, if the nuts 52a and 52b are not rotated, the torques T1 and T2 are equal, that is, the loads F1 and F2 are also equal.

Here, in order to establish T1 = T2, it is necessary to fulfill the condition that distance L1 (see Fig. 5) from the center of the hole 73 (the axis of the bolt 68) to the center of the hole 72 (the axis of the bolt 67) on the left side of the drawing in each of the link members 62a and 62b is equal to distance L2 (see Fig. 5) from the hole 73 to the center of the hole 72 (the axis of the bolt 67) on the right side of the drawing. This is because, in order to establish T1 = T2, the forces tending to move the link member 62 in the directions of A and B about the hole 73 must be equal. Since the moments about the hole 73 of the link member 62 are equalized, the following equation is established: "the product of the force tending to move in the direction of A and L1" = "the product of the force tending to move in the direction of B and L2", which results in L1 = L2. Also, the share of the load on the nuts 52a and 52b can be changed by intentionally varying the lengths of L1 and L2. Thus, for example, if the two nuts 52a and 52b are different from each other in strength, the differences in life between the two nuts 52a and 52b can be erased by increasing the share of the load on the nut having a higher strength.

As described above, in the linear actuator according to this embodiment, the nuts 52a and 52b are allowed to twist relatively to each other about the threaded shaft 51, thereby reducing the difference between the loads applied to the two nuts 52a and 52b.

It should be noted that, in the above-described embodiment, the axes of the bolts 67 and 68 are made substantially perpendicular to the rotational axis of the threaded shaft 51 from the viewpoint of reducing an imbalance of the loads applied to the nuts 52 and the load equalizing mechanism 2. However, the nuts 52 and the link members 62 may be supported in other ways if the nuts 52 can rotate circumferentially of the threaded shaft 51 and the link members 62 can swing with respect to the load transfer member 63. More specifically, the axes of the bolts 67 and 68 may be displaced from the rotational axis of the threaded shaft 51, and there is no need to make the axes of the bolts 67 and 68 perpendicular to the rotational axis of the threaded shaft 51. For example, the bolts 67 and 68 may be fastened such that any one of the axes of the bolts 67 and 68 crosses the threaded shaft 51.

Furthermore, although in the above-described embodiment, the connection between the link member 62 and the nut 52 is performed by fastening the bolt 67 to the mounting member 61, the arrangement may be such that the nut 52 are provided with an internally threaded portion and the link member 62 and the nut 52 are connected through a bolt threaded into the internally threaded portion (that is, the mounting member 61 may be eliminated).

Further, in the above description, it is assumed, for purposes of description, that the nuts 52 are ball nuts. However, the present invention may of course be applied to nuts having other rolling elements because the difference between the loads applied to the nuts 52 can be reduced in the same manner as above if there are contact portions between the nuts 52 and the threaded shaft 51.

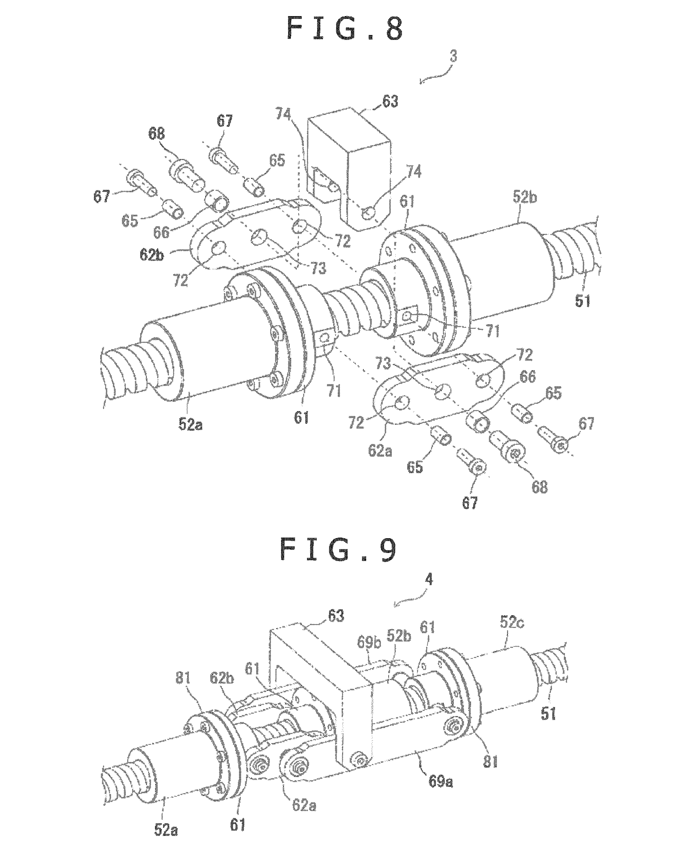

Fig. 8 is an exploded view of a load equalizing mechanism 3 in a linear actuator according to a second embodiment of the present invention. The linear actuator differs from that of the first embodiment in that the mounting member 61 and the link member 62 are connected only by the bolt 67 and the spacer 65 without the spherical bearing 64. For the rest, the second embodiment is similar to the first embodiment, and the description thereof will be skipped.

Typically, there is clearance (play) between the bolt 67 and the spacer 65 or between the spacer 65 and the hole 72 due to the influence of the machining and assembly accuracy, etc. of the components, and therefore the link member 62 can swing slightly with the bolt 68 as a shaft. If the link member 62 can swing even slightly in this manner, when unequal loads are applied, the two nuts 52a and 52b can rotate about the rotational shaft of the threaded shaft 51 as described above. Thus, the difference in load between the two nuts 52a and 52b can be reduced without using the spherical bearing 64. According to this embodiment constructed in this manner, the number of components can be reduced and costs can be reduced, as compared with the first embodiment.

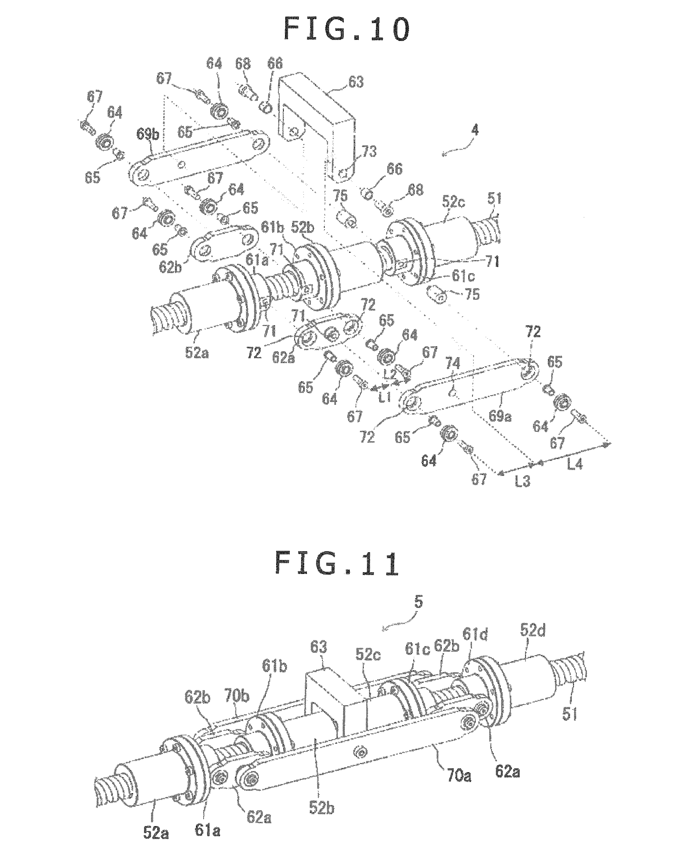

Fig. 9 is a perspective view of a load equalizing mechanism 4 in a linear actuator according to a third embodiment of the present invention, and Fig. 10 is an exploded view of the load equalizing mechanism 4 shown in Fig. 9. In this embodiment, three nuts 52a, 52b, and 52c are threaded onto the single threaded shaft 51, and there is provided a construction for reducing the difference among the loads applied to the three nuts 52a, 52b, and 52c. As major elements which are different to those of the first embodiment, there are provided a pair of link members (second link members) 69a and 69b for connecting the pair of link members 62 and the nut 52c by holding the pair of link members 62 and the nut 52c therebetween from the radial direction of the threaded shaft 51. In each of the link members 69a and 69b, the ratio between distances L3 and L4 (see Fig. 10) from the center of the hole 74 to the centers of the two holes 72 located one at each end thereof is 1: 2. The pair of link members (second link members) 69a and 69b support the pair of link members (first link members) 62a and 62b through a shaft formed by the two collinear bolts 67, and similarly, support the nut 52c through a shaft formed by the two collinear bolts 67.

In this embodiment, two out of the three nuts 52a, 52b, and 52c, namely, the two nuts 52a and 52b on the left side of the drawing, are connected by the pair of link members 62a and 62b (first link members) through the mounting portions 61, the spacers 65, the spherical bearings 64, and the bolts 67. Also, the link members 62 support the two nuts 52a and 52b so that the two nuts 52a and 52b can rotate circumferentially of the threaded shaft 51. This is the same construction as the first embodiment. However, there is a difference therebetween in that the load transfer member 63 is not connected to the link members 62.

In the first embodiment, the load transfer member 63 is rotatably supported through the spacer 66 and the bolt 68 in the hole 73 of each of the link members 62, while in the third embodiment, the hole 71 is provided in a protrusion provided on a surface of each of the link members 62a and 62b, and the pair of link members 69a and 69b are swingably connected through the two bolts 67 that are each threaded into an internally threaded portion formed in the hole 71. Each of the bolts 67 is disposed inside the spherical bearing 64 and the spacer 65 that are stored in the hole 72 (hole 72 located closer to the hole 74) located on the left side of the drawing in each of the link members 69a and 69b. It should be noted that the protrusion on each of the link members 62 is provided for avoiding contact between the flange 81 and the link member 69, and preferably, the height of the protrusion is adjusted as appropriate according to the size of the flange 81.

In each of the link members 69a and 69b, the spherical bearing 64, the spacer 65, and the bolt 67 are also disposed inside the hole 72 (hole 72 located away from the hole 74) located on the right side of the drawing. The bolt 67 is threaded, through a spacer 75, into the hole 71 of the mounting portion 61 connected to the nut 52c located on the right side of the drawing. Thus, the pair of link members 69a and 69b support the nut 52c such that the nut 52c is rotatable circumferentially the threaded shaft 51. It should be noted that the spacer 75 is provided for supporting the link members 69a and 69b substantially parallel to the rotational shaft of the threaded shaft 1.

In each of the link members 69a and 69b, the hole 74 located in between the two holes 72 is formed with an internally threaded portion for threadedly engaging the bolt 68. The load transfer member 63 is provided with the holes 73 each for insertion of the spacer 66 and the bolt 68, and the bolt 68 is threaded into the internally threaded portion of the hole 74 through the spacer 66. Thus, the load transfer member 63 supports the pair of link members 69a and 69b so that they can swing about the axis of the bolt 68.

Also, the distances L1 and L2 (see Fig. 10) from the axis of the bolt 67 through which the link members 69a and 69b each support the corresponding link member 62 to the axes of the two bolts 67 through which the link member 62 supports the two nuts 52a and 52b are equal. Further, as described above, the ratio between the distances L3 and L4 (see Fig. 10) is 1:2, L3 being the distance from the axis of the bolt 68 through which the load transfer member 63 supports the pair of link members 69a and 69b to the axis of the bolt 67 (bolt 67 on the left side of the drawing) through which the pair of link members 69a and 69b supports the pair of link members 62a and 62b, L4 being the distance from the axis of the bolt 68 through which the load transfer member 63 supports the pair of link member 69a and 69b to the axis of the bolt 67 (bolt 67 on the right side of the drawing) through which the pair of link members 69a and 69b supports the nut 52c. It should be noted that in this embodiment, the ratio between L3 and L4 is set to 1:2 in order to approximately equalize the loads applied to the nuts 52a, 52b, and 52c; however, such ratio may be changed where appropriate as described in the first embodiment.

It should be noted that, in the example shown in the drawing, the two pairs of bolts 67 for connecting the two nuts 52a and 52b and the pair of link members 62a and 62b are fixed with their axes substantially perpendicular to the rotational axis of the threaded shaft 51. Furthermore, the two bolts 67 for connecting the pair of link members 69a and 69b and the nut 52c and the two bolts 68 for connecting the pair of link members 69a and 69b and the load transfer member 63 are each fixed with its axis substantially perpendicular to the rotational axis of the threaded shaft 51.

With the linear actuator constructed as described above, firstly, because the ratio between L3 and L4 is 1:2, the ratio between the total load applied to the two nuts 52a and 52b located on the left side of the drawing and the load applied to the nut 52c on the right end of the drawing becomes 2:1. Additionally, the loads applied to the two nuts 52a and 52b on the left side of the drawing are equalized. Thus, the ratio of the loads applied to the three nuts 52a, 52b, and 52c becomes 1:1:1, and therefore the differences among the loads applied to the nuts 52 can be easily reduced even if there are the three nuts 52.

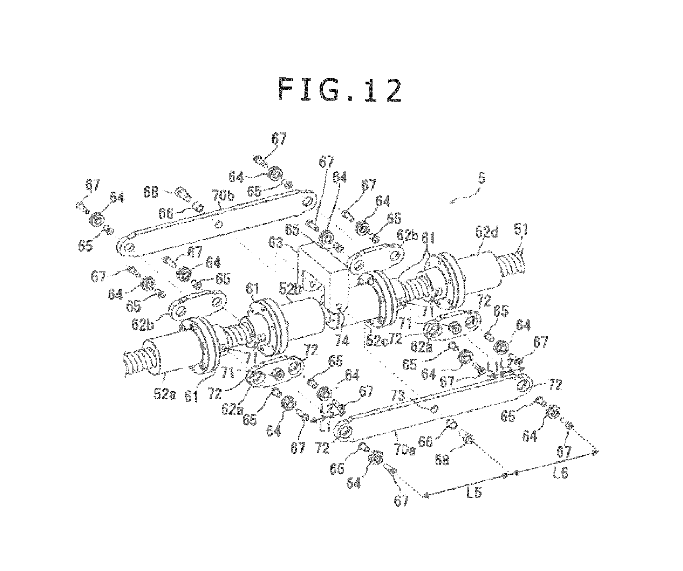

Fig. 11 is a perspective view of a load equalizing mechanism 5 in a linear actuator according to a fourth embodiment of the present invention, and Fig. 12 is an exploded view of the load equalizing mechanism 5 shown in Fig. 11. In this embodiment, four nuts 52a, 52b, 52c, and 52d are threaded onto the single threaded shaft 51, and there is provided a construction for reducing the difference among the loads applied to the four nuts 52a, 52b, 52c, and 52d. As major elements which are different to those of the first embodiment, there are provided a pair of link members (third link members) 70a and 70b that are longer than the link members 62. The pair of link members (third link members) 70a and 70b connect two pairs of the link members 62a and 62b (first link members and second link members) arranged axially of the threaded shaft 51, by holding the two pairs of link members 62a and 62b therebetween from the radial direction of the threaded shaft 51. The pair of link members 70a and 70b support one of the two pairs of link members 62a and 62b through a shaft formed by the two collinear bolts 67, and similarly, support the other of the two pairs of link members 62a and 62b through a shaft formed by the two collinear bolts 67. Furthermore, in each of the pair of link members 70a and 70b, distances L5 and L6 (see Fig. 12) from the center of the hole 73 to the centers of the two holes 72 located one at each end are equal.

In this embodiment, two out of the four nuts 52a, 52b, 52c, and 52d, namely, the two nuts 52a and 52b on the left side of the drawing are connected by the one pair of link members 62a and 62b, and the other two out of the four nuts 52a, 52b, 52c, and 52d, namely, the two nuts 52c and 52d on the right side of the drawing are connected by the other pair of link members 62a and 62b. The link members 62 and the nuts 52a, 52b, 52c, and 52d are connected to each other through the mounting portions 61, the spacers 65, the spherical bearings 64, and the bolts 67. Also, each of link members 62 supports the two connected nuts 52 so that they can rotate circumferentially of the threaded shaft 51. This is the same construction as the two nuts 52a and 52b located on the left side of the drawing in the third embodiment.

The hole 71 provided in a protrusion on each of the link members 62 is provided with an internally threaded portion, and each of the link members 62 is swingably connected to the corresponding link member 70 through the bolt 67 threaded into the internally threaded portion. Each of the two bolts 67 for swingably supporting the two link members 62 located at the near end or far end of the sheet of the drawing is disposed inside the spherical bearing 64 and the spacer 65 that are stored in the hole 72 located at both ends of the drawing in the link member 70.

The load transfer member 63 is provided with the holes 74 that are each formed with an internally threaded portion for fastening the bolt 68. In each of the link members 70a and 70b, the spacer 66 is disposed inside the hole 73 located in between the two holes 72, and the bolt 68 is threaded into the internally threaded portion of the hole 74 through the spacer 66. Thus, the load transfer member 63 supports the pair of link members 70a and 70b swingably about the axis of the bolt 68.

The distances L1 and L2 (see Fig. 12) from the axis of the bolt 67 through which the link member 70 supports the link member 62 to the axes of the two bolts 67 through which the link member 62 supports the two nuts 52 are equal. Further, as described above, the distances L5 and L6 (see Fig. 10) from the axis of the bolt 68 through which the load transfer member 63 supports the pair of link members 70a and 70b to the axes of the bolts 67 through which the pair of link members 70a and 70b supports the two link members 62 are equal. It should be noted that in this embodiment, the ratio between L5 and L6 and the ratio between L1 and L2 are each set to 1:1 in order to approximately equalize the loads applied to the nuts 52a, 52b, 52c, and 52d, however, such ratios may be changed where appropriate as described in the first embodiment.

With the linear actuator constructed as described above, the total load applied to the two nuts 52a and 52b located on the left side of the drawing and the total load applied to the two nuts 52c and 52d on the right end of the drawing are equalized. Additionally, the loads applied to the two nuts 52a and 52b on the left side of the drawing are equalized, and similarly, the loads applied to the two nuts 52c and 52d on the right side of the drawing are also equalized. Thus, the ratio of the loads applied to the four nuts 52a, 52b, 52c, and 52d becomes 1:1:1:1, and therefore the differences among the loads applied to the nuts 52 can be easily reduced even if there are the four nuts 52.

The above is a description of the first to fourth embodiments illustrating constructions for equalizing the loads applied to two to four nuts. In the same manner as these constructions, by dividing the nuts into two groups and setting the ratio of the loads applied to the two groups to 1:1 or 2:1, and then further dividing each of the two groups into two groups and repeating the process, the differences among the loads applied to the nuts can be easily reduced in theory, no matter how many of nuts are threaded onto the threaded shaft 51.

### List of Reference Signs

- 1: Linear actuator
- 2, 3, 4, 5: Load equalizing mechanism
- 51: Threaded shaft
- 52: Nut
- 53: Linear guide rail
- 54: Linear guide movable portion
- 55: Drive target
- 56: Side plate
- 57: Motor
- 61: Mounting member
- 62: Link member
- 63: Load transfer member
- 64: Spherical bearing
- 65, 66: Spacer
- 67, 68: Bolt
- 69: Link member
- 70: Link member
- 81: Flange

## Claims

1. A linear actuator including a threaded shaft and a plurality of nuts threaded onto the threaded shaft to drive a drive target with axial displacement of the threaded shaft caused by relatively rotating the threaded shaft and the plurality of nuts about an axis of the threaded shaft, comprising:
a link member to connect two nuts of the plurality of nuts, the link member supporting the two nuts rotatably circumferentially of the threaded shaft; and
a load transfer member connected to the drive target to swingably support the link member.

2. The linear actuator according to claim 1,
wherein: the link member supports one of the two nuts through a first shaft and the other of the two nuts through a second shaft; and
the load transfer member supports the link member through a third shaft.

3. The linear actuator according to claim 2,
wherein distances from an axis of the third shaft to axes of the first and second shafts are equal.

4. A linear actuator including a threaded shaft and three nuts threaded onto the threaded shaft to drive a drive target with axial displacement of the threaded shaft caused by relatively rotating the threaded shaft and the three nuts about an axis of the threaded shaft, comprising:
a first link member to connect two nuts of the three nuts, the first link member supporting the two nuts rotatably circumferentially of the threaded shaft;
a second link member to connect a remaining single nut of the three nuts and the first link member, the second link member supporting the single nut rotatably circumferentially of the threaded shaft and swingably supporting the first link member; and
a load transfer member connected to the drive target to swingably support the second link member.

5. The linear actuator according to claim 4,
wherein: the first link member supports one of the two nuts through a first shaft and the other of the two nuts through a second shaft;
the second link member supports the single nut through a third shaft and the first link member through a fourth shaft;
the load transfer member supports the second link member through a fifth shaft;
distances from an axis of the fourth shaft to axes of the first and second shafts are equal; and
a ratio between a distance from an axis of the fifth shaft to the axis of the fourth shaft and a distance from the axis of the fifth shaft to an axis of the third shaft is 1:2.

6. A linear actuator including a threaded shaft and four nuts threaded onto the threaded shaft to drive a drive target with axial displacement of the threaded shaft caused by relatively rotating the threaded shaft and the four nuts about an axis of the threaded shaft, comprising:
a first link member to connect two nuts of the three nuts, the first link member supporting the two nuts rotatably circumferentially of the threaded shaft;
a second link member to connect remaining two nuts of the three nuts, the second link member supporting the remaining two nuts rotatably circumferentially of the threaded shaft;
a third link member to connect the first link member and the second link member, the third link member swingably supporting the first link member and the second link member; and
a load transfer member connected to the drive target to swingably support the third link member.

7. The linear actuator according to claim 6,
wherein: the first link member supports one of the two nuts through a first shaft and the other of the two nuts through a second shaft;
the second link member supports one of the remaining two nuts through a third shaft and the other of the remaining two nuts through a fourth shaft;
the third link member supports the first link member through a fifth shaft and the second link member through a sixth shaft;
the load transfer member supports the third link member through a seventh shaft;
distances from an axis of the fifth shaft to axes of the first and second shafts are equal;
distances from an axis of the sixth shaft to axes of the third and fourth shafts are equal; and
distances from an axis of the seventh shaft to the axes of the fifth and sixth shafts are equal.
